# EUROPEAN PATENT SPECIFICATION

(11) **EP 2 471 648 B1**
(45) Date of publication and mention of the grant of the patent: **03.07.2013**
(21) Application number: 11150069.0
(22) Date of filing: 04.01.2011
(51) Int. Cl.: B29C 49/42

(54) **Method of aligning handles in rows for a rotating blow-molding machine for handled-bottles**
Verfahren zum Ausrichten von Griffen in einer Reihe für eine rotierende Blasformmaschine für Flaschen mit Griff
Procédé d'alignement d'anses en lignes pour machine rotative de moulage par soufflage pour bouteilles à anse

(43) Date of publication of application: 04.07.2012
(73) Proprietor: Bottle-Top Development Co., Nantou City (TW)
(72) Inventor: Chin, Simon, Nantou City, Taiwan (TW); Hsieh, Arthur, Nantou City, Taiwan (TW); Sun, Wan-Chi, Nantou City, Taiwan (TW)
(74) Representative: Schultenkämper, Johannes

(56) References cited:
- EP-A2- 0 460 788
- CN-Y- 201 009 388
- DE-A1-102008 038 781
- FR-A1- 2 796 591
- TW-U- M 348 691
- US-A1- 2004 083 603

## Description

### FIELD OF THE INVENTION

The present invention relates to a method of aligning handles of bottles in row and particularly to a method of aligning handles in rows for a rotating blow-molding machine for handled-bottles, as per the preamble of claim 1. Document EP 0 460 788 discloses such a method.

### BACKGROUND OF THE INVENTION

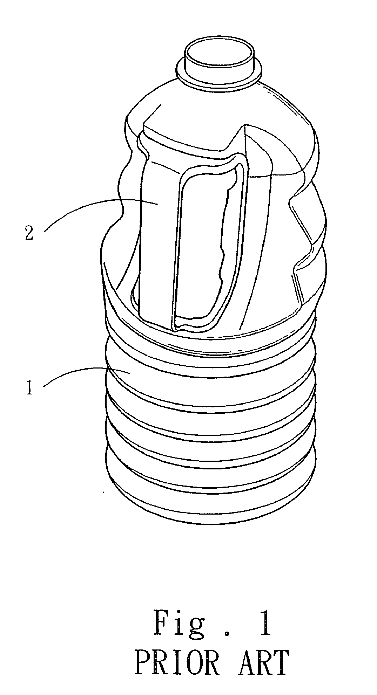

Rotating blow-molding machine for handled-bottles provides many advantages, such as mass production, save space and the like, thus is widely employed to produce various types of liquid containers used in households. For a bottle 1 with a large capacity a handle 2 usually is provided as shown in FIG. 1 to facilitate grasping and using.

In a conventional handled-bottles blow-molding machine, it is usually formed in a linear type or needs to receive handles manually. The rotating handled-bottles blow-molding machine still is not widely used commercially. The main bottleneck is that the speed of handle alignment cannot match the high production speed of the rotating blow-molding machine. Moreover, an extra mechanism to align handles in rows in a fixed direction has to be provided to convey the aligned handles synchronously to the rotating handled-bottle blow-molding machine to match a corresponding bottle blowing module. However, it would be more difficult to implement, need a great deal of equipments, and has higher cost.

### SUMMARY OF THE INVENTION

Therefore the primary object of the present invention is to solve the aforesaid conventional problem by providing a plurality of row aligning modules in a rotating blow-molding machine for handled-bottles. The row aligning modules are provided at a number same as bottle blowing modules to form a plurality of common modules. Each row aligning module provides an aligned handle to a corresponding bottle blowing module. Thus the bottleneck of high speed synchronized production process required in the rotating blow-molding machine can be overcome.

To achieve the foregoing object, the present invention provides a method according to claim 1 of aligning handles in rows for a rotating blow-molding machine for handled bottles. The rotating blow-molding machine includes a plurality of bottle blowing modules. The method of aligning handles in rows includes steps of: providing at least one handle conveying device to provide a plurality of unaligned handles; and providing a plurality of row aligning modules at a number same as the bottle blowing modules to be paired therewith to form a plurality of common modules. The row aligning modules receive the handles from the handle conveying device and arrange the handles in rows and send the aligned handles to the corresponding bottle blowing modules.

Thus, by pairing the row aligning modules and the bottle blowing modules to form the common modules the row aligning modules can be rotated with the bottle blowing modules without synchronization problem of handle movement at high speed between them. Moreover, each row aligning module arranges its own handles. In one process cycle of the rotating blow-molding machine each row aligning module needs to provide only one aligned handle. Hence there is sufficient time to arrange the handles in rows to prevent the high speed production bottleneck that requires high speed row alignment for the rotating blow-molding machine for handled-bottles.

The foregoing, as well as additional objects, features and advantages of the present invention will be more readily apparent from the following embodiments and detailed description, which proceed with reference to the accompanying drawings. The embodiments serve merely for illustrative purpose and are not the limitation of the present invention.

### BRIEF DESCRIPTION OF THE DRAWINGS

- FIG. 1: is a perspective view schematically showing a conventional bottle with a handle.
- FIG. 2: is a perspective view schematically showing the structural configuration for the present invention for aligning handles in rows.
- FIG. 3: is a perspective view schematically showing one row aligning module of the present invention.
- FIGS. 4A, 4B and 4C: are sectional views schematically showing a first embodiment of the first direction row aligning chute of the present invention.
- FIGS. 5A, 5B and 5C: are sectional views schematically showing a second embodiment of the first direction row aligning chute of the present invention.
- FIGS. 6A and 6B: are perspective views schematically showing the second direction row aligning chute structure.
- FIG. 7: is a perspective view schematically showing the present invention with a handle entering an interim holding zone.
- FIG. 8: is a perspective view schematically showing the present invention with a handle entering a transporting device.
- FIG. 9: is a perspective view schematically showing the present invention with a handle transported to a bottle blowing module.
- FIG. 10: is a perspective view schematically showing the present invention with a handle held temporarily to a bottle blowing module.

### DETAILED DESCRIPTION OF THE PREFERRED EMBODIMENTS

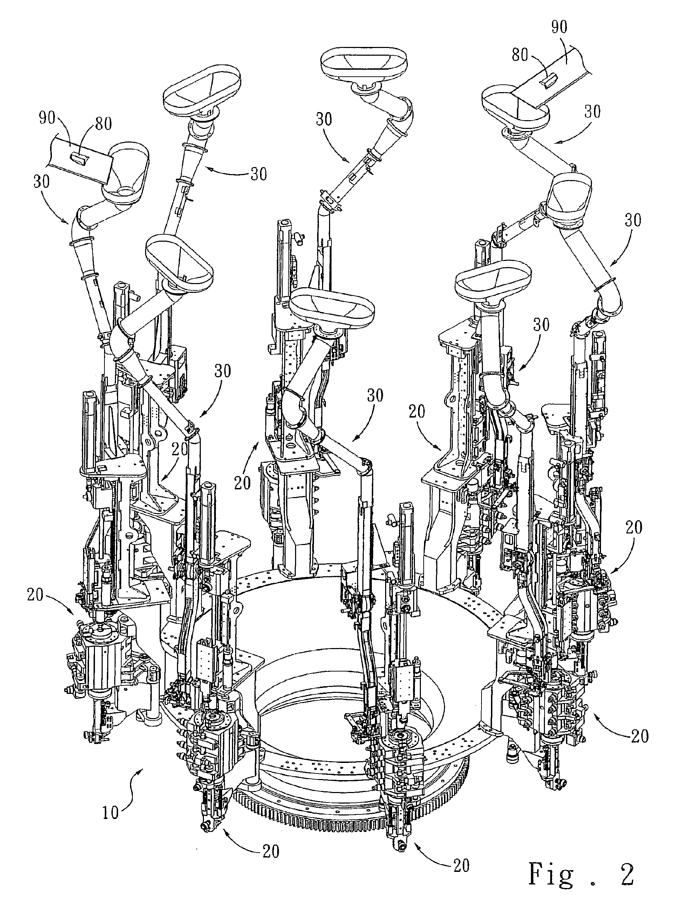

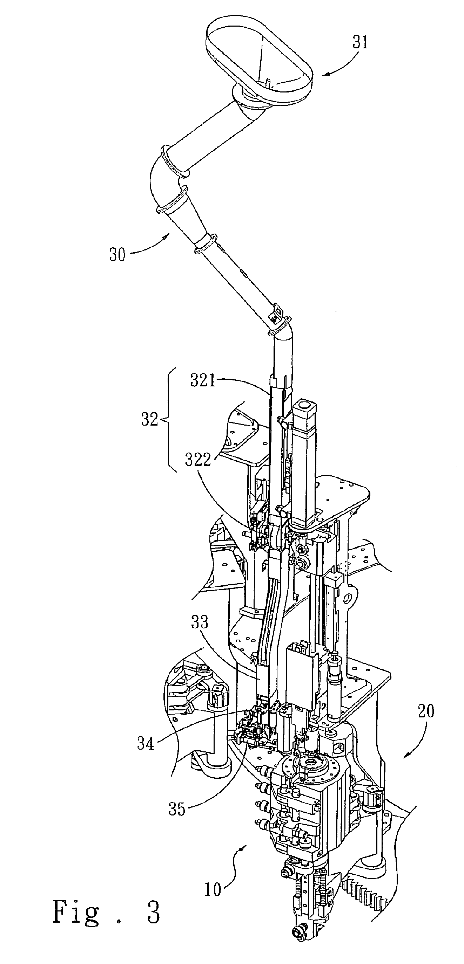

Please referring to FIGS. 2 and 3, the present invention discloses a method of aligning handles in rows to provide a plurality of aligned handles 80 to a rotating blow-molding machine 10. The rotating handled-bottle blow-molding machine 10 has a plurality of bottle blowing modules 20; eight is taken as an example for discussion below, but shall not be deemed as the limitation of the present invention. The method of the present invention includes the steps of: providing at least one handle conveying device 90 at a number not greater than that of the bottle blowing modules 20 to provide unaligned handles 80; and providing a plurality of row aligning modules 30 at a number same as the bottle blowing modules 20 to be paired therewith to form a plurality of common modules. The row aligning modules 30 receive the handles 80 from the handle conveying device 90 and align the handles 80 in rows and send them to the corresponding bottle blowing modules 20.

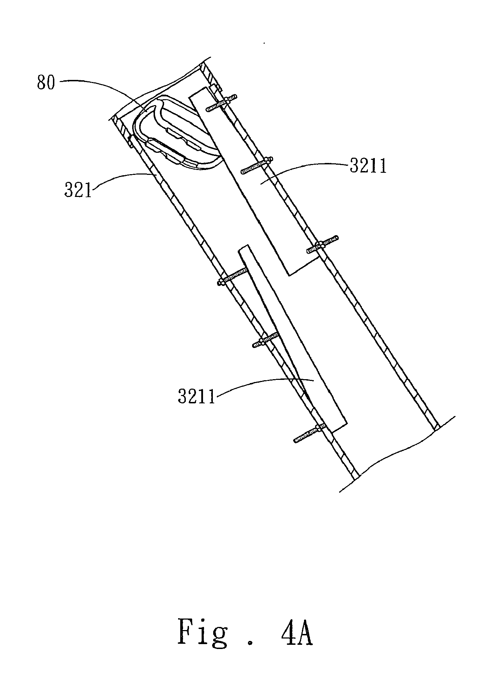

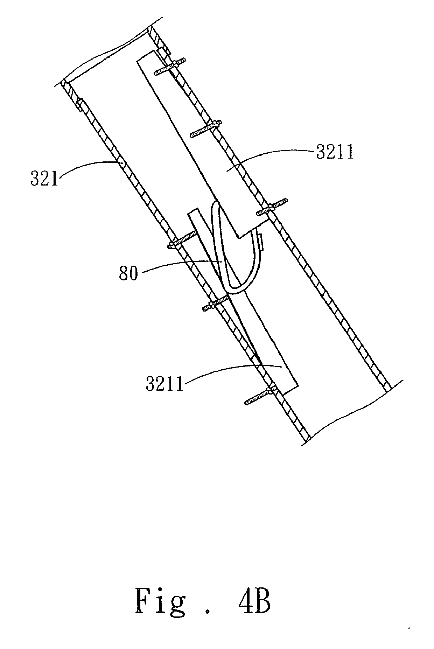

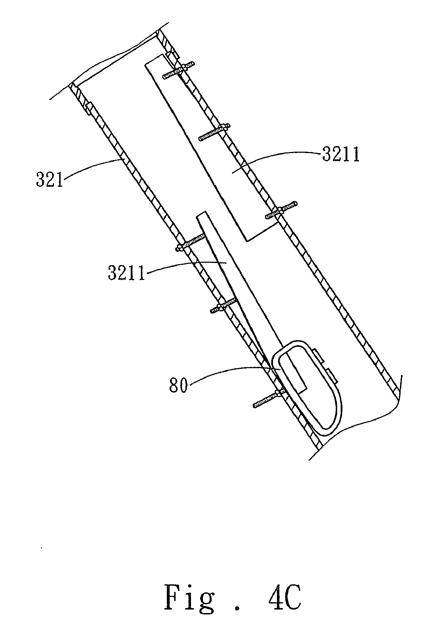

Each of the row aligning modules 30 includes a holding tray 31, a row aligning chute 32, an interim holding zone 33, a dispensing device 34 and a transporting device 35. Also referring to FIGS. 4A through 6A, the row aligning chute 32 can include a first direction row aligning chute 321 and a second direction row aligning chute 322 to align handles of two asymmetrical directions. The handle conveying device 90 is located above anyone of the holding tray 31 to receive the unaligned handles 80 in the holding tray 31. The number of the handle conveying device 90 can match the number of the row aligning modules 30 so as to send the unaligned handles 80 to varying holding trays 31 for aligning.

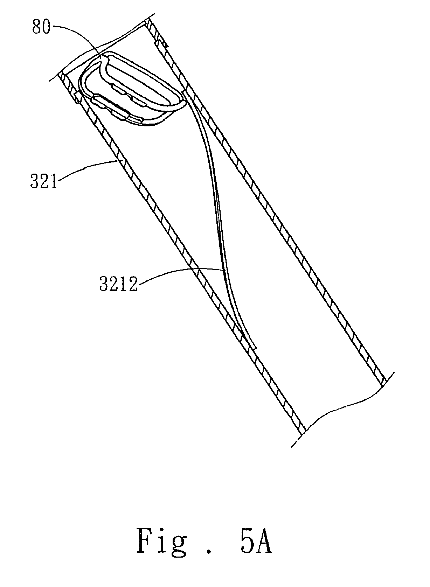

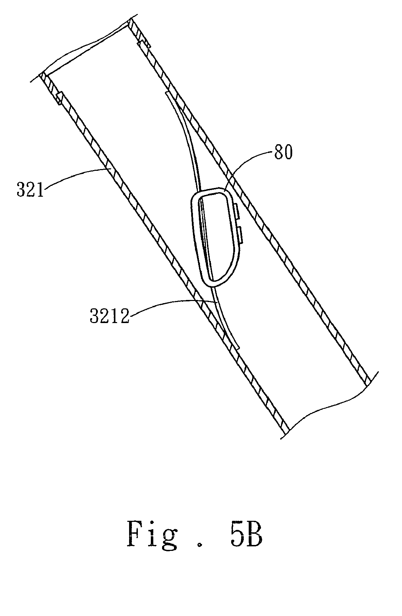

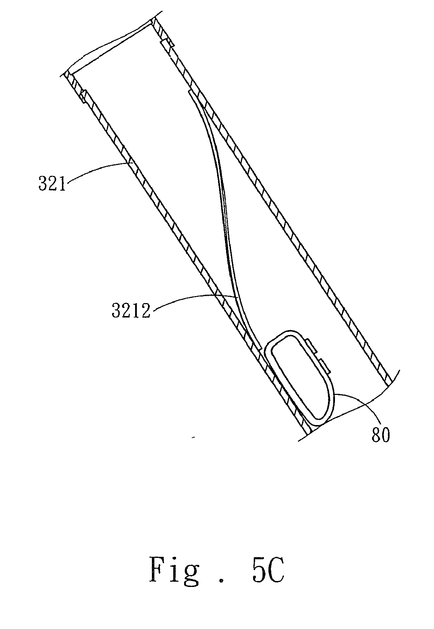

Also referring to FIGS. 4A to 4C, 5A to 5C, 6A to 6B and 7, the handles 80 are arranged in rows through the row aligning chute 32 and held temporarily in the interim holding zone 33. Alignment of the handle 80 can be accomplished through dropping downwards by gravity, and guided by a plurality of baffles 322 to form in a row (referring to FIGS. 4A through 4C). FIG. 4A shows the sectional view of an embodiment of the first direction row aligning chute 321. The baffles 3211 can limit the moving direction of the handles 80 and align the handles 80. The baffles 3211 may also be substituted by a helical track 3212 (shown in FIGS. 5A through 5C) to achieve same result of row alignment.

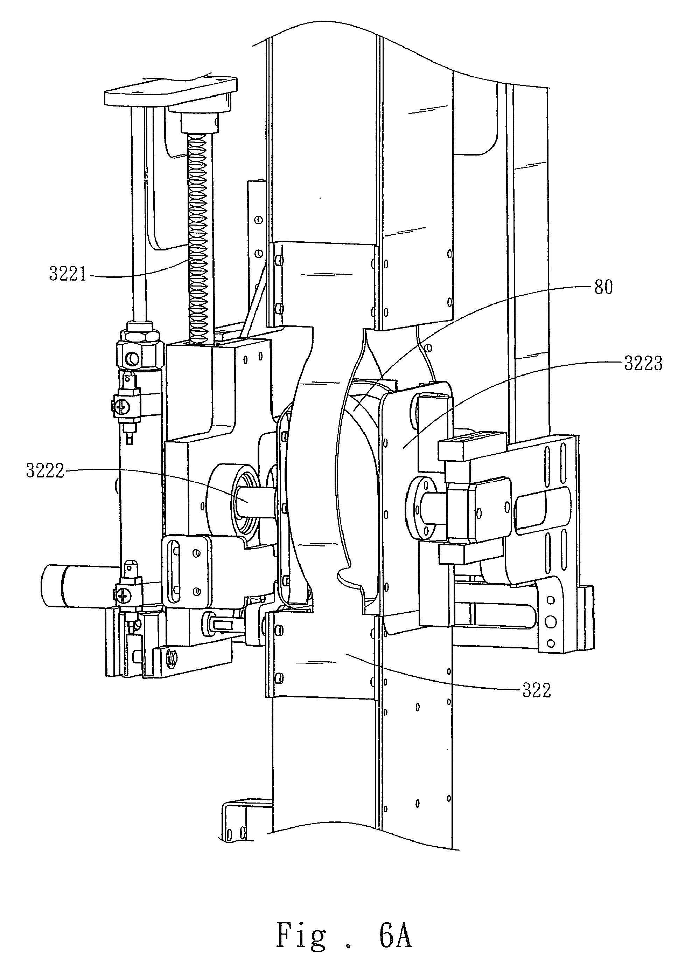

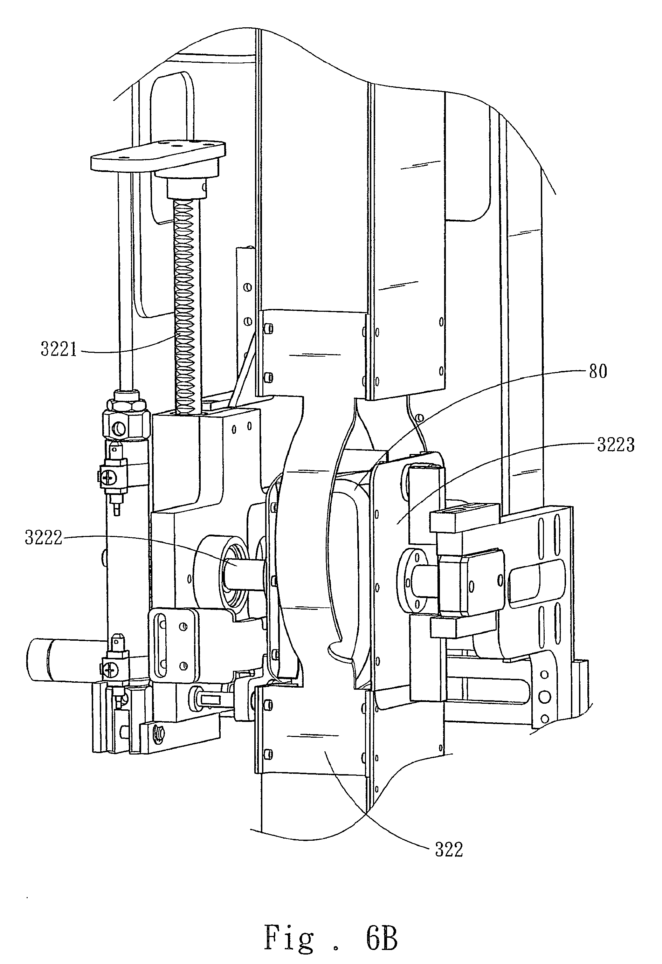

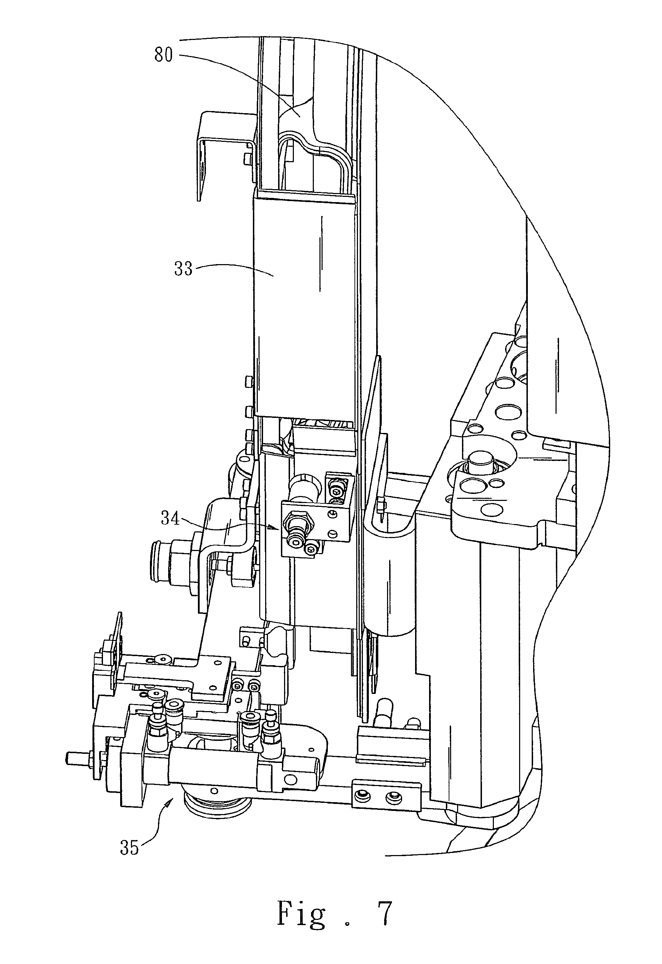

In this embodiment the handles 80 are presented in two asymmetrical directions, hence they also are aligned through the second direction row aligning chute 322. Refer to FIGS. 6A and 6B for a possible embodiment for the second direction row aligning chute 322. It includes a screw bar 3221, a pivot knob 3222 and a flipping dock 3223. Each handle 80 is held in the flipping dock 3223. The screw bar 3221 turns the pivot knob 3222 to drive the flipping dock 3223 to flip the handle 80 to be aligned in a row. The aligned handle 80 is temporarily held at the interim holding zone 33 (referring to FIG. 7).

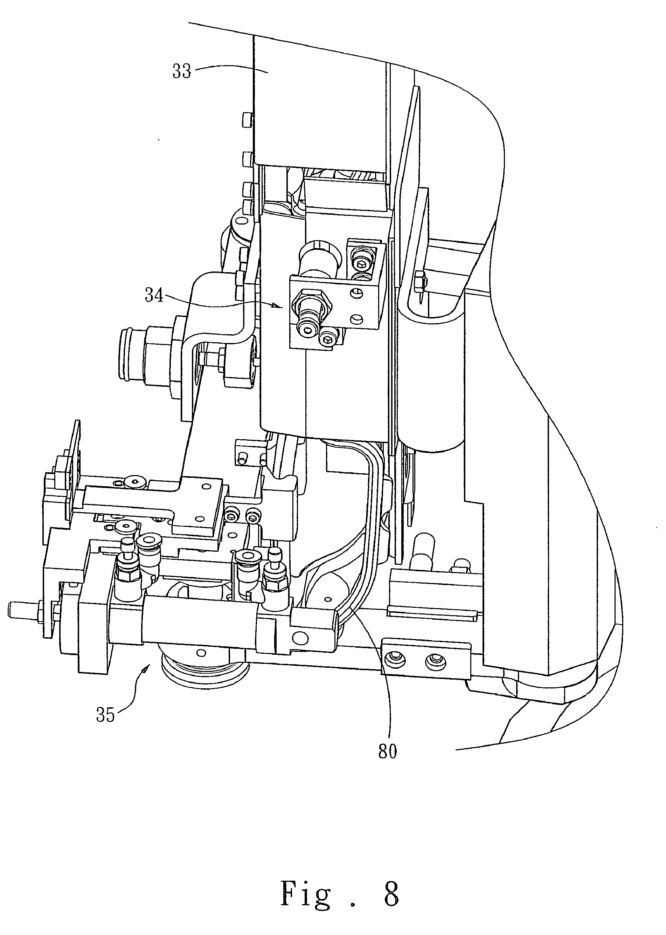

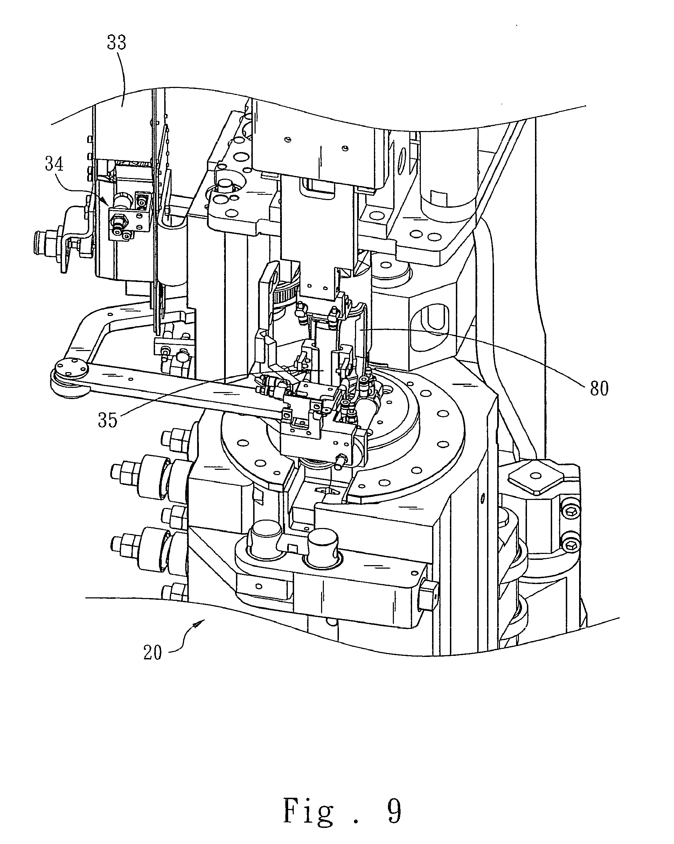

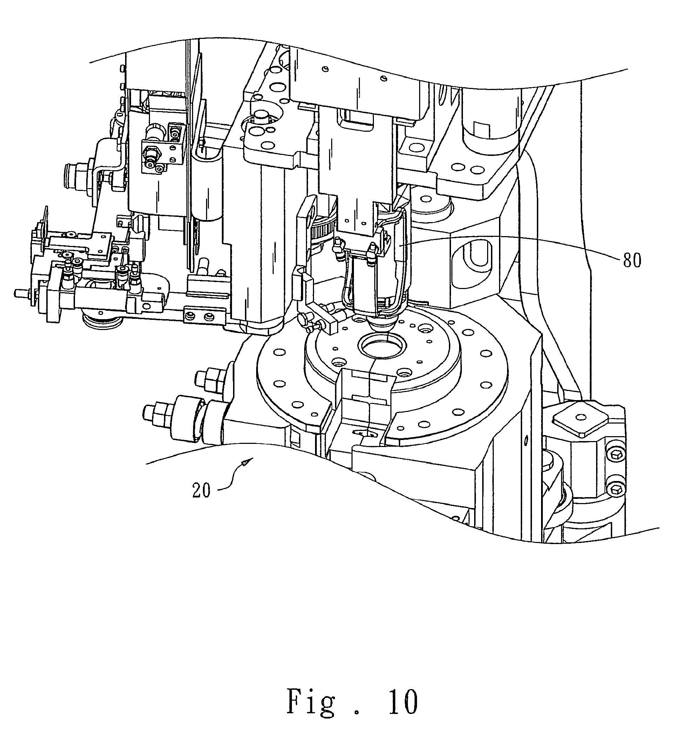

Referring to FIGS. 8, 9 and 10, the dispensing device 34 is located below the bottom of the interim holding zone 33. The dispensing device 34 processes in a first in first out order to release all the aligned handles 80 to the transporting device 35 (referring to FIG. 8); then the transporting device 35 transports the handles 80 to the bottle blowing modules 20 (referring to FIG. 9) to be positioned temporarily (Referring to FIG. 10) to go through a bottle blowing process.

As a conclusion, the method of present invention provides the row aligning modules 30 at the same number of the bottle blowing modules 20 in a paired fashion to form common modules. Therefore the row aligning modules 30 are rotated together with the bottle blowing modules 20 to prevent the problems of high speed synchronized transport. Moreover, each row aligning module 30 aligns its own handles 80 in a row, thus within the time period of each rotation cycle of the rotating handled-bottle blow-molding machine 10 each row aligning module 30 needs to provide merely one aligned handle. As a result, the present invention provides sufficient time to align all the handles, and can prevent the bottleneck of high speed handle row alignment in high speed production of the rotating handled-bottle blow-molding machine.

## Claims

1. A method of aligning handles in rows for a rotating blow-molding machine for handled-bottles, the rotating blow-molding machine (10) including a plurality of bottle blowing modules (20) wherein the method comprises the step of providing at least one handle conveying device (90) to provide unaligned handles (80); **characterized in that** the method further comprises the following steps:
providing a plurality of row aligning modules (30) at a number same as the bottle blowing modules (20) to be paired therewith to form a plurality of common modules; the row aligning modules (30) receiving the handles (80) from the handle conveying devices (90) and aligning the handles (80) in rows and sending the aligned handles (80) to the corresponding bottle blowing modules (20).

2. The method of claim 1, **characterized in that** each of the row aligning modules (30) includes a holding tray (31), a row aligning chute (32), an interim holding zone (33), a dispensing device (34) and a transporting device (35); the handle conveying device (90) being located above anyone of the holding tray (31) to receive the unaligned handles (80) in the holding tray (31), the handles (80) being aligned through the row aligning chute (32) and held temporarily at the interim holding zone (33).

3. The method of claim 2, **characterized in that** the row aligning chute (32) includes a first direction row aligning chute (321) and a second direction row aligning chute (322) to align the handles (80) of varying directions.

4. The method of claim 2, **characterized in that** the dispensing device (34) is located below the interim holding zone (33) to release the aligned handles (80) held in the interim holding zone (33) in a first in first out order to the transporting device (35).

5. The method of claim 4, **characterized in that** the transporting device (35) transports the aligned handles (80) to the corresponding bottle blowing modules (20) for holding temporarily.

## Patentansprüche

1. Verfahren zum Ausrichten von Griffen in Reihen für eine rotierende Blasformmaschine für Flaschen mit Griff, wobei die rotierende Blasformmaschine (10) eine Vielzahl von Flaschenblasmodulen (20) aufweist, wobei das Verfahren den Schritt des Bereitstellens von mindestens einer Griff-Fördereinrichtung (90) aufweist, um ausgerichtete Griffe (80) bereitrustellen, **dadurch gekennzeichnet, dass** das Verfahren die folgenden Schritte aufweist:
Bereitstellen einer Vielzahl von Reihen-Ausrichtungs-Modulen (30) zu einer Anzahl gleich wie die Flaschenblasmodule (20), um damit paarweise gekoppelt zu werden, um eine Vielzahl von gemeinsamen Modulen zu bilden; wobei die Reihen-Ausrichtungs-Module (30) die Griffe (80) von den Griff-Fördereinrichtungen (90) empfangen und die Griffe (80) in Reihen ausrichten und die ausgerichteten Griffe (80) zu den entsprechenden Flaschenblasmodulen (20) übergeben.

2. Verfahren nach Anspruch 1, **dadurch gekennzeichnet, dass** jedes der Reihen-Ausrichtungs-Module (30) eine Auffangschale (31), eine Reihen-Ausrichtungs-Rutsche (32), einen Zwischen-Halte-Bereich (33), eine Ausgabevorrichtung (34) und eine Transportvorrichtung (35) aufweist; wobei die Griff-Fördereinrichtung (90) oberhalb einer jeden der Halteschalen (31) angeordnet ist, um die nicht ausgerichteten Griffe (80) in der Halteschale (31) zu empfangen, wobei die Griffe (80) durch die Reihen-Ausrichtungs-Rutsche (32) ausgerichtet werden und vorübergehend an dem Zwischen-Haltebereich (33) gehalten werden.

3. Verfahren nach Anspruch 2, **dadurch gekennzeichnet, dass** die Reihen-Ausrichtungs-Rutsche (32) eine Reihen-Ausrichtungs-Rutsche (321) mit einer ersten Ausrichtung und eine Reihen-Ausrichtungs-Rutsche (322) mit einer zweiten Ausrichtung aufweist, um die Griffe (80) mit unterschiedlichen Richtungen auszurichten.

4. Verfahren nach Anspruch 2, **dadurch gekennzeichnet, dass** die Ausgabevorrichtung (34) unterhalb des Zwischen-Halte-Bereichs (33) angeordnet ist, um die ausgerichteten Griffe (80), die in einem Zwischen-Haltebereich (33) gehalten werden, in einer first in - first out -Reihenfolge an die Transporteinrichtung (35) freizugeben.

5. Verfahren nach Anspruch 4, **dadurch gekennzeichnet, dass** die Transporteinrichtung (35) die ausgerichteten Griffe (80) zu den entsprechenden Flaschenblasmodulen (20) zum vorübergehenden Halten transportiert.

## Revendications

1. Une méthode pour aligner les anses en rangées pour une machine rotative de moulage pour bouteilles présentant une anse, la machine rotative de moulage (10) comportant une pluralité de modules de soufflage de bouteilles (20) dans laquelle la méthode comporte l'étape de fournir au moins un dispositif de convoyage pour poignées (90) pour fournir des poignées non alignées (80), **caractérisée en ce que** la méthode comporte en outre les étapes suivantes :
fournir une pluralité de modules d'alignement par rangée (30) en nombre égal au nombre de modules de soufflage de bouteilles (20) devant être appairés pour former une pluralité de modules communs ; les modules d'alignement par rangée (30) recevant les poignées (80) des dispositifs de convoyage de poignées (90) et alignant les poignées (80) en rangées et fournissant des poignées alignées (80) aux modules de soufflage de bouteilles correspondants.

2. La méthode de la revendication 1, **caractérisée en ce que** chacun des modules d'alignement par rangée (30) comporte un chariot de maintien (31), un conduit d'alignement par rangée (32), une zone de maintien provisoire (33), un dispositif de délivrance (34) et un dispositif de transport (35) ; le dispositif de convoyage de poignées (90) étant disposé au-dessus de chacun des chariot de maintien (31) pour la réception des poignées non alignées (80) dans le chariot de maintien (31), les poignées (80) étant alignées au travers le conduit d'alignement par rangée (32) et provisoirement maintenu dans la zone de maintien provisoire (33).

3. La méthode de la revendication 2, **caractérisée en ce que** le conduit d'alignement par rangée (32) comporte un conduit d'alignement par rangée d'une première direction (321) et un conduit d'alignement par rangée d'une seconde direction (322) pour aligner les poignées (80) suivant des directions variées.

4. La méthode de la revendication 2, **caractérisée en ce que** le dispositif de délivrance (34) est situé sous la zone de maintien provisoire (33) pour relâcher les poignées alignées (80) maintenues dans la zone de maintien provisoire (33) suivant un premier ordre de sortie vers le dispositif de transport (35).

5. La méthode de la revendication 4, **caractérisée en ce que** le dispositif de transport (35) transporte les poignées alignées (80) vers les modules de soufflage de bouteilles correspondants (20) pour un maintien provisoire.
